# EUROPEAN PATENT APPLICATION

(11) **EP 4 492 344 A1**
(43) Date of publication of application: **15.01.2025**
(21) Application number: 24176021.4
(22) Date of filing: 15.05.2024
(51) Int. Cl.: G07C 5/08

(54) **AUTOMATED DRIVING SYSTEM**

(30) Priority: 10.07.2023 JP 2023113094
(71) Applicant: TOYOTA JIDOSHA KABUSHIKI KAISHA, Toyota-shi, Aichi-ken, 471-8571 (JP)
(72) Inventor: OHSUGI, Masamichi, Tokyo, 103-0022 (JP); URANO, Hiromitsu, Tokyo, 103-0022 (JP)
(74) Representative: J A Kemp LLP

(57) **Abstract**

An automated driving system (100) one or more processors (110) configured to recognize a situation around the vehicle (1) from detection information detected by a recognition sensor (11) and perform automated driving control based on a recognition result. The automated driving system (100) execute a storing process of storing log data of the detection information in one or more storage devices (120) while performing the automated driving control. In the storing process, the automated driving system (100) specify a low reliability area (2) around the vehicle (1) where a reliability of the recognition result is low. When the low reliability area (2) is specified, the automated driving system (100) preferentially store the log data of target detection information that is the detection information related to the low reliability area (2).

## Description

### CROSS-REFERENCE TO RELATED APPLICATION

The present disclosure claims priority to the contents of which application are incorporated herein by reference in their entirety.

### TECHNICAL FIELD

The present disclosure relates to an automated driving system installed on a vehicle.

### BACKGROUND ART

A technique of performing automated driving control of a vehicle by using a machine learning model is known. Patent Literature 1 discloses a method for collecting training data that can be used for training of a machine learning model. In addition, the following Patent Literatures 2 and 3 are documents showing the technical level of the present technical field.

### List of Related Art

Patent Literature 1; WO 2019116423 A1
Patent Literature 2: JP 2021174413 A
Patent Literature 3: JP 2022023956 A

### SUMMARY

As a method for ex-post facto assessment of automated driving control of a vehicle, it is containable to store log data related to the automated driving control in an in-vehicle storage device. However, since the capacity of the storage device installed in the vehicle is limited, if the capacity of the storage device is strained, there is a possibility that necessary log data will not be able to be stored. Among log data related to the automated driving control, the log data of detection information by a recognition sensor that detects information around a vehicle is particularly required for the verification of the automated driving control, but the data amount thereof is likely to be large.

An object of the present disclosure is, in the view of the above problems, to provide a technique capable of efficiently using the capacity of a storage device.

One aspect of the present disclosure is directed to an automated driving system installed in a vehicle.

The automated driving system comprises:
a recognition sensor detecting information around the vehicle;
one or more processors configured to recognize a situation around the vehicle from detection information detected by the recognition sensor and perform automated driving control based on a recognition result; and
one or more storage devices.

The one or more processors are further configured to execute a storing process of storing log data of the detection information in the one or more storage devices while performing the automated driving control.

In the storing process, the one or more processors are configured to:
specify a low reliability area around the vehicle where a reliability of the recognition result is low; and
when the low reliability area is specified, preferentially store the log data of target detection information that is the detection information related to the low reliability area.

According to the present disclosure, the log data of the target detection information that is the detection information related to the low reliability area is preferentially stored. The low reliability area is an area around the vehicle where the reliability of the recognition result is low. This allows the capacity of the storage device to be used efficiently from the viewpoint of the high necessity in the verification of the automated driving control.

### BRIEF DESCRIPTION OF DRAWINGS

FIG. 1 is a diagram showing an example of a configuration related to automated driving control of a vehicle according to the present embodiment;
FIG. 2 is a diagram showing an example of a hardware configuration of the automated driving system according to the present embodiment;
FIG. 3 is a flowchart showing a process executed by a processor according to the present embodiment;
FIG. 4A is a diagram for explaining a low reliability area;
FIG. 4B is a diagram for explaining target detection information;
FIG. 5A is a diagram for explaining preferential storage of log data of the target detection information;
FIG. 5B is a diagram for explaining preferential storage of the log data of the target detection information;
FIG. 5C is a diagram for explaining preferential storage of the log data of the target detection information; and
FIG. 6 is a diagram for explaining information related to a specific recognition result.

### DETAILED DESCRIPTION

### 1. AUTOMATED DRIVING SYSTEM

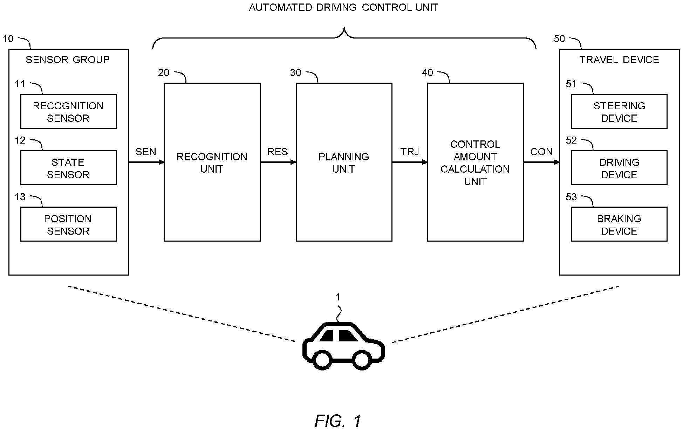

The present embodiment relates to an automated driving system that is installed on a vehicle and performs automated driving control of the vehicle. FIG. 1 is a diagram showing an example of a configuration related to automated driving control of a vehicle 1 by an automated driving system according to the present embodiment. The automated driving is to automatically perform at least one of steering, acceleration, and deceleration of the vehicle 1 without depending on a driving operation performed by an operator. The automated driving control is a concept including not only complete automated driving control but also risk avoidance control, lane keep assist control, and the like. The operator may be a driver on board the vehicle 1 or may be a remote operator who remotely operates the vehicle 1.

The vehicle 1 includes a sensor group 10, a recognition unit 20, a planning unit 30, a control amount calculation unit 40, and a travel device 50.

The sensor group 10 includes a recognition sensor 11 detecting information around the vehicle 1. Examples of the recognition sensor 11 include a camera, a laser imaging detection and ranging (LIDAR), a radar, and the like. The sensor group 10 may further include a state sensor 12 that detects a state of the vehicle 1, a position sensor 13 that detects a position of the vehicle 1, and the like. Examples of the state sensor 12 include a speed sensor, an acceleration sensor, a yaw rate sensor, a steering angle sensor, and the like. As the position sensor 13, a global navigation satellite system (GNSS) sensor is exemplified.

Sensor detection information SEN is information detected by the sensor group 10. For example, the sensor detection information SEN includes image data captured (taken) by the camera. Furthermore, the sensor detection information SEN may include information (e.g., relative position, relative velocity, class, and the like) regarding a specific object appearing in the image (e.g., a pedestrian, a preceding vehicle, a white line, a bicycle, a road sign, and the like). Also, for example, the sensor detection information SEN may include point cloud data detected by the LIDAR. Also, for example, the sensor detection information SEN may include information on a relative position and a relative velocity of objects detected by the radar. The sensor detection information SEN may include vehicle state information indicating the state of the vehicle 1. The sensor detection information SEN may include position information indicating the position of the vehicle 1.

The recognition unit 20 receives the sensor detection information SEN. The recognition unit 20 recognizes a situation around the vehicle 1 based on the sensor detection information SEN detected by the recognition sensor 11. Also, for example, the recognition unit 20 generates a space map in which the recognized object is integrated into the map information. Examples of the object include a pedestrian, another vehicle (e.g., a preceding vehicle, a parked vehicle, and the like), a white line, a road structure (e.g., a guard rail, a curb, and the like), a fallen object, a traffic light, an intersection, a sign, and the like. Furthermore, the recognition unit 20 may perform prediction of the behavior of an object around the vehicle 1. Recognition result information RES indicates a result of recognition by the recognition unit 20.

The planning unit 30 receives the recognition result information RES from the recognition unit 20. The planning unit 30 generates a travel plan of the vehicle 1 based on the received recognition result information RES. The planning unit 30 may further receive the vehicle state information and the position information. The travel plan may be one for arriving at a destination set in advance. The travel plan may be one for avoiding a risk. The travel plan provides driving decisions such as, for example, maintaining a current travel lane, making a lane change, overtaking, making a right or left turn, steering, accelerating, decelerating, stopping, and the like. Further, the planning unit 30 generates a target trajectory TRJ required for the vehicle 1 to travel in accordance with the travel plan. The target trajectory TRJ includes a target position and a target velocity.

The control amount calculation unit 40 receives the target trajectory TRJ from the planning unit 30. The control amount calculation unit 40 calculates a control amount CON required for the vehicle 1 to follow the target trajectory TRJ. It can be also said that the control amount CON is a control amount required for reducing a deviation of the vehicle 1 from the target trajectory TRJ. The control amount CON includes at least one of a steering control amount, a driving control amount, and a braking control amount. Examples of the steering control amount include a target steering angle, a target steering torque, a target motor angle, a target motor drive current, and the like. Examples of the driving control amount include a target driving force, a target engine torque, and the like. Examples of the braking control amount include a target braking force, a target braking torque, and the like.

The travel device 50 includes a steering device 51, a driving device 52, and a braking device 53. The steering device 51 steers wheels of the vehicle 1. The driving device 52 is a power source that generates a driving force. Examples of the driving device 52 include an engine, an electric motor, an in-wheel motor, and the like. The braking device 53 generates a braking force. The travel device 50 receives the control amount CON from the control amount calculation unit 40. The travel device 50 operates the steering device 51, the driving device 52, and the braking device 53 in accordance with the steering control amount, the driving control amount, and the braking control amount, respectively. Thus, the vehicle 1 travels so as to follow the target trajectory TRJ.

The recognition unit 20 includes at least one of a rule-based model and a machine learning model. The rule-based model performs the recognition process based on a predetermined rule group. Examples of the machine learning model include a neural network (NN), a support vector machine (SVM), a regression model, a decision tree model, and the like. The NN may be a convolutional neural network (CNN), a recurrent neural network (RNN), or a combination of CNN and RNN. The type of each layer, the number of layers, and the number of nodes in the NN are arbitrary. The machine learning model is generated in advance through machine learning. The recognition unit 20 performs the recognition process by inputting the sensor detection information SEN into the model. The recognition result information RES is output from the model or generated based on the output from the model.

Similarly, the planning unit 30 also includes at least one of a rule-based model and a machine learning model. The planning unit 30 performs the planning process by inputting the recognition result information RES into the model. The target trajectory TRJ is output from the model or generated based on the output from the model.

Similarly, the control amount calculation unit 40 also includes at least one of a rule-based model and a machine learning model. The control amount calculation unit 40 performs the control amount calculation process by inputting the target trajectory TRJ into the model. The control amount CON is output from the model or generated based on the output from the model.

Two or more of the recognition unit 20, the planning unit 30, and the control amount calculation unit 40 may have an integrated architecture. All of the recognition unit 20, the planning unit 30, and the control amount calculation unit 40 may have an integrated architecture (End-to-End architecture). For example, the recognition unit 20 and the planning unit 30 may have an integrated architecture that generates and outputs the target trajectory TRJ directly from the sensor detection information SEN. Even in the case of the integrated architecture, intermediate products such as the recognition result information RES and the target trajectory TRJ may be output. For example, in a case where the recognition unit 20 and the planning unit 30 have an integrated architecture based on a NN, the recognition result information RES may be an output from an intermediate layer of the NN.

The recognition unit 20, the planning unit 30, and the control amount calculation unit 40 constitute an "automated driving control unit" that controls the automated driving of the vehicle 1.

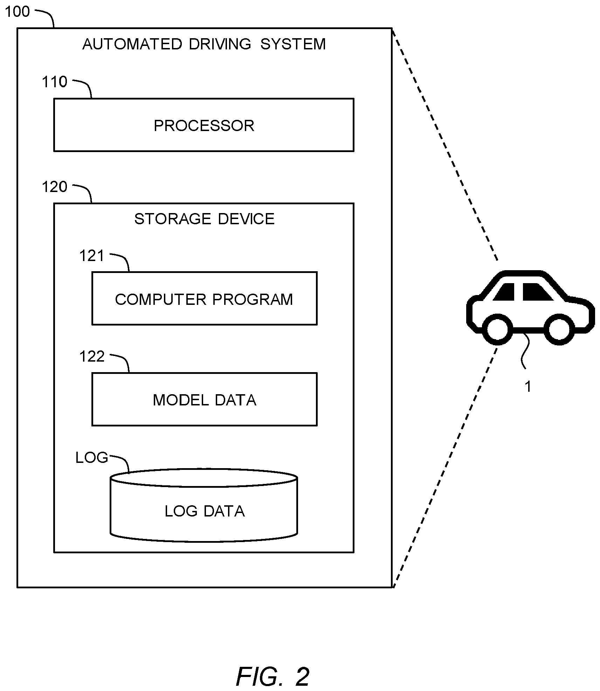

FIG. 2 is a diagram showing an example of a hardware configuration of an automated driving system 100 according to the present embodiment. The automated driving system 100 has at least the function of the automated driving control unit described above. The automated driving system 100 may further include the sensor group 10 and the travel device 50.

The automated driving system 100 includes one or more processors 110 (hereinafter, simply referred to as a processor 110 or processing circuitry) and one or more storage devices 120 (hereinafter, simply referred to as a storage device 120).

The processor 110 executes a variety of processing. The processor 110 may be configured with a central processing unit (CPU), a graphics processing unit (GPU), an application specific integrated circuit (ASIC), a field-programmable gate array (FPGA), and the like. The recognition unit 20, the planning unit 30, and the control amount calculation unit 40 may be implemented by a single processor 110 or may be respectively implemented by separate processors 110. The storage device 120 stores a variety of information necessary for the processor 110 to execute processing. The storage device 120 may be configured with a read only memory (ROM), a random access memory (RAM), a hard disk drive (HDD), a solid state drive (SSD), and the like.

The storage device 120 stores a computer program 121, model data 122, and log data LOG.

A computer program 121 is executed by the processor 110. The variety of processing by the automated driving system 100 may be implemented by a cooperation of the processor 110 executing the computer program 121 and the storage device 120. The computer program 121 may be recorded on a non-transitory computer-readable recording medium.

The model data 122 is data of models included in the recognition unit 20, the planning unit 30, and the control amount calculation unit 40. When the processor 110 executes the processing related to the automated driving control, the processor 110 selects and uses a model from the model data 122 to configure the recognition unit 20, the planning unit 30, and the control amount calculation unit 40.

While performing the automated driving control, the processor 110 acquires "log data LOG" related to the automated driving control. the processor 110 stores the acquired log data LOG in the storage device 120. It is expected that the stored log data LOG is used for verification of the automated driving control. In the present embodiment, the log data LOG collected and stored includes at least log data of the sensor detection information SEN detected by the recognition sensor 11. The log data LOG may include log data of the sensor detection information SEN detected by the state sensor 12 or the position sensor 13.

In addition, the log data LOG may include log data of the control amount CON output from the automated driving control unit, log data of the recognition result information RES output from the recognition unit 20, log data of the target trajectory TRJ output from the planning unit 30, and the like.

### 2. RECORDING LOG DATA OF DETECTION INFORMATION

As described above, in the present embodiment, the processor 110 collects at least log data of the sensor detection information SEN detected by the recognition sensor 11 and stores the log data in the storage device 120 while performing the automated driving control. The automated driving control unit recognizes the situation around the vehicle 1 based on the sensor detection information SEN detected by the recognition sensor 11, and performs the automated driving control of the vehicle 1 based on the recognition result. Therefore, the log data of the sensor detection information SEN detected by the recognition sensor 11 is data particularly required for verification of the automated driving control. Hereinafter, the sensor detection information SEN detected by the recognition sensor 11 is simply referred to as the "detection information".

The log data of the detection information includes image data, point cloud data, and the like. Therefore, the data amount of the log data of the detection information is likely to be large. On the other hand, the capacity of the storage device 120 for storing the log data LOG is limited. If the data amount of the log data LOG increases and the capacity of the storage device 120 is strained, there is a possibility that necessary log data will not be able to be stored. Therefore, when storing log data, it is required to efficiently use the capacity of the storage device 120.

The recognition result information RES may include a recognition result with high reliability or a recognition result with low reliability. For example, the recognition result information RES regarding recognized objects around the vehicle 1 may include a recognized object whose position, state, behavior prediction, etc. are recognized with high reliability, or may include a recognized object whose position, state, behavior prediction, etc. are recognized with low reliability. The automated driving control performed based on the recognition result with low reliability is likely to deviate from the intended operation of the vehicle 1. Therefore, when performing ex-post verification of the autonomous driving control, it is considered that a recognition result with low reliability is more likely to require verification than a recognition result with high reliability. That is, it is considered that the log data of the detection information related to the recognition result with low reliability is more necessary in the verification of the automated driving control.

From the above viewpoint, the automated driving system 100 according to the present embodiment makes it possible to efficiently use the capacity of the storage device 120.

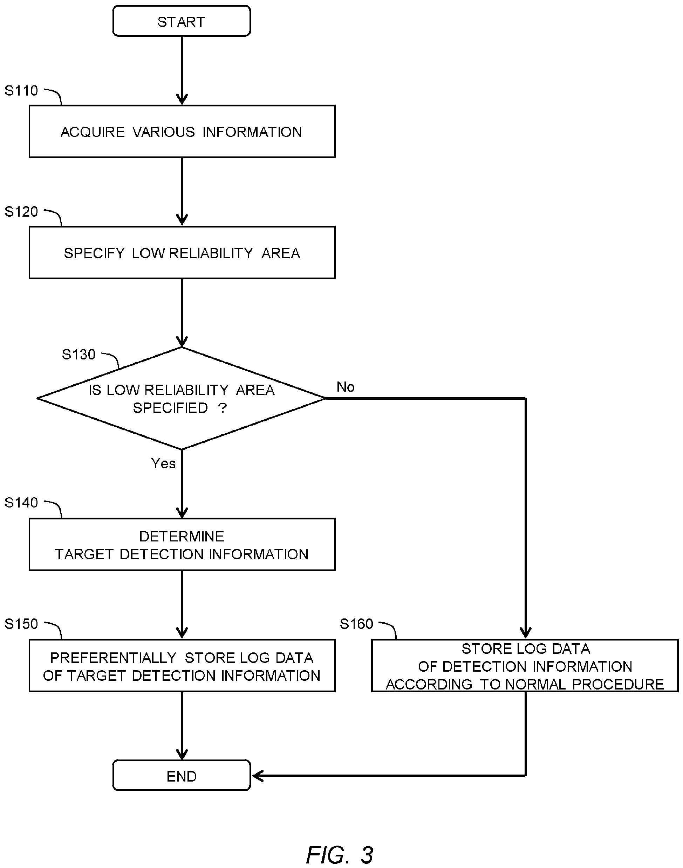

FIG. 3 is a flowchart showing an example of a process (storing process) executed by the processor 110 with respect to storing the log data of the detection information. The processing according to the flowchart shown in FIG. 3 is repeatedly executed at a predetermined processing cycle while performing the automated driving control, for example.

First, in step S110, the processor 110 acquires various information. At least the processor 110 acquires the detection information and the recognition result information RES. In the present embodiment, the recognition result information RES is generated to include reliability information for each recognition result. For example, when the recognition unit 20 is configured by a machine learning model, the reliability is the confidence level of the machine learning model for each recognition result. Also, for example, when the recognition unit 20 is configured by a rule-based model based on a statistical model, the reliability is the probability of each recognition result in the statistical model.

Next, in step S120, the processor 110 refers to the recognition result information RES and specifies an area where the reliability of the recognition result is low (hereinafter, referred to as a "low reliability area") around the vehicle 1. For example, the processor 110 specifies an area including the recognition result whose reliability is equal to or less than a predetermined threshold value as the low reliability area.

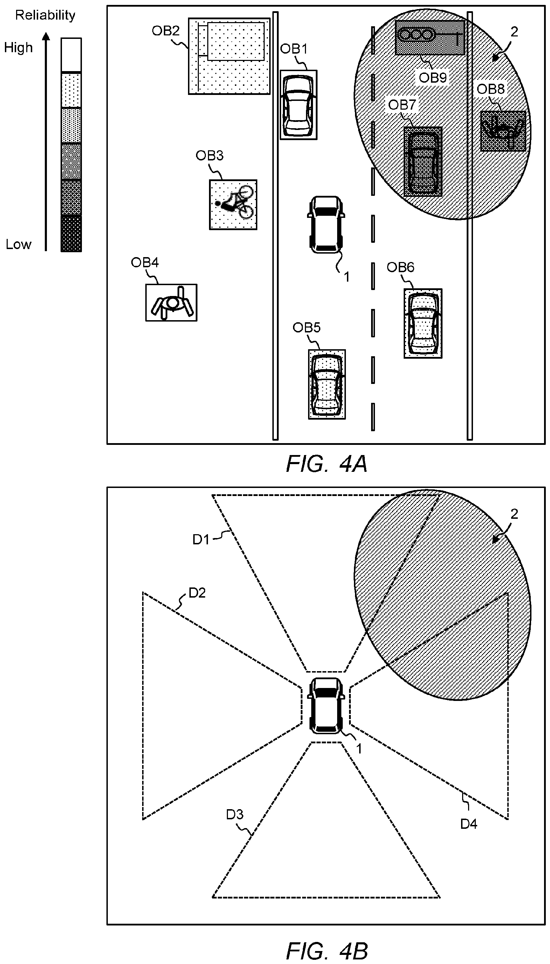

FIG. 4A is a diagram showing an example of a low reliability area 2. In FIG. 4A, multiple recognized objects OBj (j = 1, 2, ..., 9) around the vehicle 1 and the reliability level of each recognized object OBj are shown as the recognition result information RES. In the example shown in FIG. 4A, the reliability of the recognized objects OB7, OB8, and OB9 is low. Therefore, the processor 110 specifies the low reliability area 2 so as to include the recognized objects OB7, OB8, and OB9. In this case, the shape and range of the low reliability area 2 may be suitably determined according to the environment to which the present embodiment is applied. The low reliability area 2 may be constituted by two or more areas. For example, in the example shown in FIG. 4A, the processor 110 may specify three regions for each of the recognition objects OB7, OB8, and OB9 as the low reliability area 2.

When there is no recognition result with low reliability, the processor 110 may not specify the low reliability area 2. In addition, when a risk map is given as the recognition result information RES, the processor 110 may specify an area including a point where the reliability of the risk value is low as the low reliability area, for example.

Refer to FIG. 3 again. When the low reliability area 2 is not specified in step S120 (step S130; No), the processor 110 stores the log data of the detection information according to the normal procedure (step S160). The normal procedure may be any suitable one known in the art. After step S160, the current process ends.

When the low reliability area 2 is specified in step S120 (step S130; Yes), the process proceeds to step S140.

In step S140, the processor 110 determines information related to the low reliability area 2 (hereinafter, referred to as "target detection information") among the detection information. The target detection information is, for example, image data captured by a camera that includes the low reliability area 2 in an imaging range, point cloud data detected by a LIDAR that includes the low reliability area 2 in a detection range, point cloud data detected in the low reliability area 2, information of an object detected by a radar that includes the low reliability area 2 in a detection range, information of an object detected in the low reliability area 2, and the like.

FIG. 4B is a diagram for explaining an example of the target detection information. In FIG. 4B, four detection ranges D1, D2, D3, and D4 of the recognition sensor 11 are shown. That is, in the example shown in FIG. 4B, the detection information of the recognition sensor 11 corresponding to each of the four detection ranges D1, D2, D3, and D4 is acquired. As shown in FIG. 4B, the detection ranges D1 and D4 include the low reliability area 2. On the other hand, the detection ranges D2 and D3 do not include the low reliability area 2. Therefore, in this case, the processor 110 determines, as the target detection information, the detection information of the recognition sensor 11 with the detection range D 1 and the detection information of the recognition sensor 11 with the detection range D4 among the acquired detection information.

Refer to FIG. 3 again. After step S140, the process proceeds to step S150. In step S150, the processor 110 preferentially store the log data of the target detection information. That is, when the low reliability area 2 is specified, the target detection information related to the low reliability area 2 is preferentially treated in storing the log data of the detection information. After step S150, the current process ends.

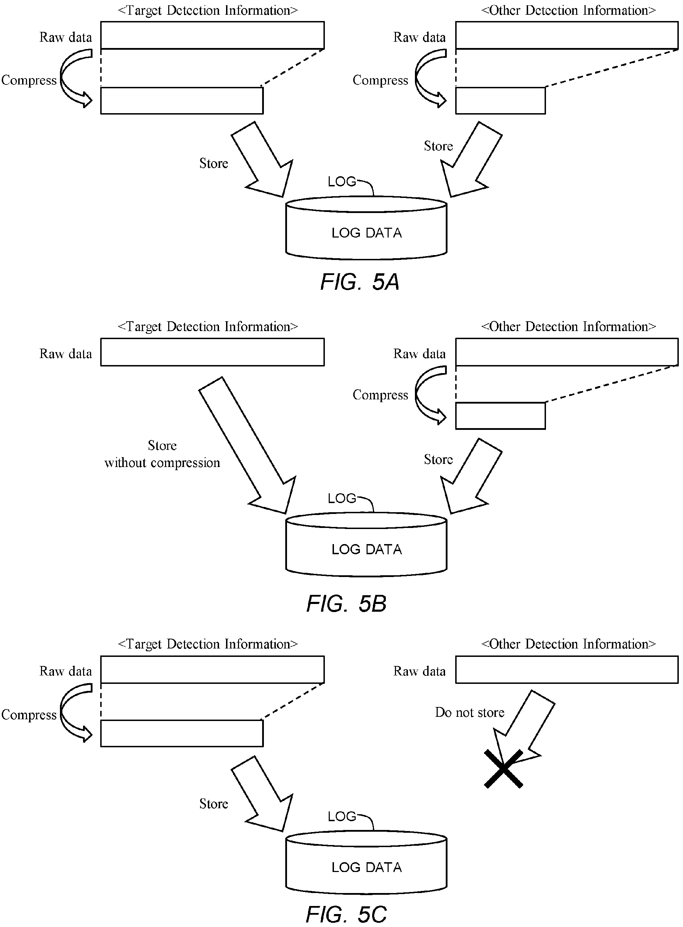

FIGS. 5A, 5 B, and 5 C are conceptual diagrams showing examples of preferential storage of the log data of the target detection information. In particular, each of FIGS. 5A, 5 B, and 5 C show a case where the processor 110 stores compressed detection information as log data.

In the example shown in FIG. 5A, the processor 110 stores the log data by setting a compression rate of the target detection information lower than that of other detection information. The higher the compression rate, the more the data amount can be reduced, but the more information is lost. Therefore, by setting the compression rate of the target detection information lower than that of other detection information, it is possible to store the log data of the target detection information in a richer manner with emphasis on preserving information. On the other hand, it is possible to store the log data of other detection information with emphasis on reducing the data amount. In particular, the processor 110 may be configured to apply lossless compression to the target detection information and lossy compression with a high compression rate to other detection information. In this way, in the example shown in FIG. 5A, preferential storage of the log data of the target detection information is realized.

In the example shown in FIG. 5B, the processor 110 stores the log data of the target detection information without compressing. This can also be seen as setting the compression rate of the target detection information to 0%. In this sense, the example shown in FIG. 5B can be considered as a part of the example shown in FIG. 5A. Therefore, in the example shown in FIG. 5B, preferential storage of the log data of the target detection information is realized as in the example shown in FIG. 5A.

In the example shown in FIG. 5C, the processor 110 stores only the log data of the target detection information. That is, in the example shown in FIG. 5C, the processor 110 does not store the log data of other detection information. In this way, in the example shown in FIG. 5C, preferential storage of the log data of the target detection information is realized.

The processor 110 may be configured to switch the method of storing the log data of the target detection information depending on the free capacity of the storage device 120. For example, the processor 110 may be configured to store the log data of the detection information as shown in FIG. 5B when the free capacity is sufficient, store the log data of the detection information as shown in FIG. 5A when the free capacity is less than a first threshold value, and store the log data of the detection information as shown in FIG. 5C when the free capacity is further less than a second threshold value.

As described above, in the automated driving system 100 according to the present embodiment, the processor 110 executes processing related to the storage of the log data of the detection information. And a log data storage method according to the present embodiment is realized by the processor 110 executing the processing in this way. And a log data storage program according to the present embodiment is realized by the computer program 121 that causes the processor 110 to execute the processing in this way.

### 3. EFFECT

As described above, according to the present embodiment, the log data of the target detection information is preferentially stored. The target detection information is the detection information related to the low reliability area 2 where the reliability of the recognition result is low, and is more necessary in the verification of the automated driving control. Therefore, according to the present embodiment, from the viewpoint of the high necessity in the verification of the automated driving control, the capacity of the storage device 120 can be efficiently used.

### 4. Modifications

The automated driving system 100 according to the present embodiment may adopt the following modified embodiment.

### 4-1. Storing Log Data Of Target Detection Information

Each recognition result included in the recognition result information RES may be involved in the calculation of the control amount of the automated driving control or may not be involved in the calculation of the control amount of the automated driving control. For example, when the planning unit 30 generates the travel plan or the target trajectory TRJ based on the recognition result information RES, a part of the recognition result information RES may not be involved in the generation of the travel plan or the target trajectory TRJ. When performing ex-post verification of the automated driving control, it is considered that a recognition result involved in the calculation of the control amount of the automated driving control (hereinafter, referred to as a "specific recognition result") is more likely to require verification than a recognition result not involved in the calculation of the control amount of the automated driving control. That is, it is considered that the log data of the detection information related to the specific recognition result is more necessary in the verification of the automated driving control.

Therefore, the processor 110 may be configured to, when storing the log data of the target detection information, store the log data of information related to the specific recognition result among the target detection information with higher priority. For example, the processor 110 may store the log data by setting the compression rate of the information related to the specific recognition result lower than that of other target detection information.

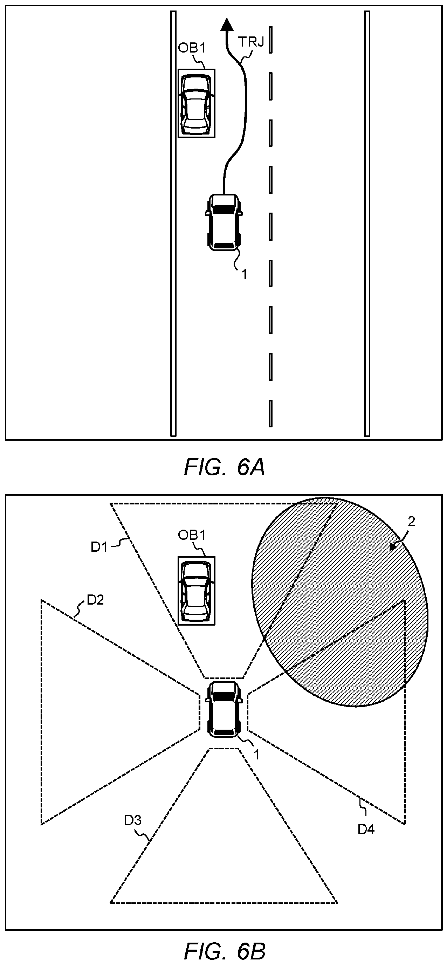

FIGS. 6A and 6B are diagrams for explaining information related to the specific recognition result. FIG. 6A shows the target trajectory TRJ generated by the recognition unit 20. In FIG. 6A, the target trajectory TRJ is generated so as to avoid the recognized object OB1 which is a parked vehicle parked on the roadside. That is, the recognized object OB1 is a specific recognition result. In FIG. 6B, similar to the case shown in FIG. 4B, four detection ranges D1, D2, D3, and D4 of the recognition sensor 11 and the low reliability area 2 are shown. Further, FIG. 6B shows the recognized object OB1 which is the specific recognition result. In FIG. 6B, similar to the case shown in FIG. 4B, the processor 110 determines, as the target detection information, the detection information of the recognition sensor 11 with the detection range D 1 and the detection information of the recognition sensor 11 with the detection range D4 among the acquired detection information. Further, the detection range D1 includes the recognized object OB1 which is the specific recognition result. That is, the detection information of the recognition sensor 11 with the detection range D1 is information related to the specific recognition result. Therefore, in this case, the processor 110 stores the detection information of the recognition sensor 11 with the detection range D1 with higher priority when storing the log data of the target detection information.

By adopting such a modified embodiment, the capacity of the storage device 120 can be used more efficiently from the viewpoint of the high necessity in the verification of the automated driving control.

### 4-2. Reproduction Data

In the above description, the case where the processor 110 stores the compressed detection information as the log data has been described. Further, for the purpose of reducing the data amount of the log data, the processor 110 may be configured to generate reproduction data for reproducing the detection information in a pseudo manner. And the processor 110 may be configured to store the generated reproduction data as the log data.

For example, when the detection information is image data, the processor 110 generates, as reproduction data, information capable of generating an image that reproduces an object captured in original image data in a pseudo manner. In this case, the reproduction data may be information on a position, a state (e.g., blur, darkness, and the like), a shape, etc. of an object captured in original image data. The processor 110 may be configured to generate the reproduction data using the parameters in the approximate space of the image data. For example, when the detection information is point cloud data, the processor 110 generates, as reproduction data, information capable of generating a point cloud that reproduces original point cloud data in a pseudo manner. In this case, the reproduction data may be information on the intensity of the reflected light detected by a LIDAR when the original point cloud data is detected.

Since the reproduction data is information for reproducing the detection information in a pseudo manner, the data amount is smaller than that of the original detection information. Further, the detection information reproduced in a pseudo manner by the reproduction data is expected to output the same recognition result information RES as the original detection information. Therefore, by employing such a modified embodiment, it is possible to reduce the data amount of the log data while ensuring the verification of the automated driving control.

The data amount of the reproduction data varies depending on how faithfully original information is reproduced. That is, the more faithful the reproduction, the less information is lost, but the larger the data amount becomes. The processor 110 may be configured to generate the reproduction data that reproduces original information more faithfully with respect to the target detection information than with respect to other detection information. This configuration also makes it possible to realized preferential storage of the log data of the target detection information. Furthermore, the processor 110 may be configured to store the compressed reproduction data as the log data. In this case, the processor 110 may be configured to realize the preferential storage of the log data of the target detection information as described with reference to FIGS. 5A, 5B, and 5C.

## Claims

1. An automated driving system (100) installed on a vehicle (1) comprising:
a recognition sensor (11) detecting information around the vehicle (1);
one or more processors (110) configured to recognize a situation around the vehicle (1) from detection information detected by the recognition sensor (11) and perform automated driving control based on a recognition result; and
one or more storage devices (120), wherein
the one or more processors (110) are further configured to execute a storing process of storing log data of the detection information in the one or more storage devices (120) while performing the automated driving control, and
in the storing process, the one or more processors (110) are configured to:
specify a low reliability area (2) around the vehicle (1) where a reliability of the recognition result is low; and
when the low reliability area (2) is specified, preferentially store the log data of target detection information that is the detection information related to the low reliability area (2).

2. The automated driving system (100) according to claim 1, wherein
in the storing process, the one or more processors (110) are configured to:
acquire a specific recognition result that is the recognition result involved in a calculation of a control amount of the automated driving control; and
store the log data of information related to the specific recognition result among the target detection information with higher priority.

3. The automated driving system (100) according to claim 1 or 2, wherein
in the storing process, the one or more processors (110) are configured to:
compress the detection information and store the compressed detection information as the log data; and
preferentially store the log data of the target detection information by setting a compression rate of the target detection information lower than that of other detection information.

4. The automated driving system (100) according to claim 1 or 2, wherein
in the storing process, the one or more processors (110) are configured to:
generate reproduction data for reproducing the detection information in a pseudo manner; and
store the reproduction data as the log data.
